# EUROPEAN PATENT APPLICATION

(11) **EP 4 488 875 A1**
(43) Date of publication of application: **08.01.2025**
(21) Application number: 23184078.6
(22) Date of filing: 07.07.2023
(51) Int. Cl.: G06K 19/04, G06K 19/07

(54) **RFID SENSOR DEVICE AND METHOD OF MANUFACTURING THE SAME**

(71) Applicant: Assa Abloy AB, 107 23 Stockholm (SE)
(72) Inventor: FURTER, Urs, 1845 Noville (CH)
(74) Representative: Kramer Barske Schmidtchen Patentanwälte PartG mbB

(57) **Abstract**

An RFID sensor device (10) includes an RFID chip having a sensing circuitry for sensing a physical quantity such as temperature and strain. A spacer (18) is provided on a surface (S1) of a substrate (12) on which the RFID chip is mounted, and includes an opening (20) inside of which the RFID chip 14 is arranged. The thickness of the spacer (18) is selected such that, when the RFID sensor device (10) is attached to a surface to be monitored, the RFID chip is in close proximity to the surface to be able to reliably sense the desired physical quantity.

## Description

### Technical Field

The present disclosure generally relates to radio frequency identification (RFID) devices, in particular, to an RFID sensor device and a method of manufacturing the same.

### Background

Generally, RFID devices such as, for example, RFID cards, RFID tags, etc. include an RFID antenna and an integrated circuit provided on an RFID chip and connected to the RFID antenna. Upon presence of an electromagnetic field emitted by a reader device, the RFID antenna supplies energy from the electromagnetic field to the integrated circuit, which integrated circuit may communicate with the reader device using radio frequency (RF) communication protocols. In this manner, for example, data can be read from a memory associated with the integrated circuit, and can also be written into said memory, if desired.

Recently, RFID devices have been used as sensor devices for sensing physical quantities such as temperature, strain, and the like. In such applications, the RFID chip not only performs the usual RFID communications via the RFID antenna, but also transmits detection results from a sensing element integrated into the RFID chip. A sensor signal from the sensing element is converted to a modulated RF signal and transmitted via the RFID antenna.

The present disclosure is directed, at least in part, to improving or overcoming one or more aspects of prior systems.

### Summary of the Disclosure

According to one aspect of the present disclosure, an RIFD sensor device comprises a substrate having a first surface and an opposite second surface, an RIFD antenna provided on the substrate, and an RFID chip mounted on the first surface of the substrate. The RFID chip is configured to perform RFID communications via the RFID antenna and includes a sensing circuitry for sensing at least one physical quantity. A spacer is provided on the first surface of the substrate. The spacer includes an opening extending through the spacer. The RFID chip is mounted inside the opening.

According to another aspect of the present disclosure, a method of manufacturing an RFID sensor device comprises the steps of providing a substrate having a first surface and an opposite second surface, an RFID antenna provided on the substrate, mounting an RFID chip on the first surface of the substrate, the RFID chip being configured to perform RFID communications via the RFID antenna, and including sensing circuitry for sensing at least one physical quantity, and providing a spacer on the first surface of the substrate. The spacer includes an opening extending through the spacer, and the RFID chip is mounted inside the opening.

Other features and aspects of the present disclosure will be apparent from the following description and the accompanying drawings.

### Brief Description of the Drawings

Fig. 1 is a schematic perspective view showing an RFID sensor device in accordance with the present disclosure attached to an object to be monitored,
Fig. 2 shows an exemplary explosive view of the RFID sensor device in accordance with the present disclosure,
Fig. 3 shows a plan view of the RFID sensor device in accordance with the present disclosure,
Fig. 4 shows a side view of the RFID sensor device in accordance with the present disclosure,
Fig. 5 shows a bottom view of the RFID sensor device in accordance with the present disclosure,
Fig. 6 shows a schematic cross-sectional view along the line A-A in Fig. 3,
Fig. 7 shows an enlarged detail of the cross-sectional view of Fig. 6, and
Fig. 8 shows a schematic plan view of an exemplary RFID chip in accordance with the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure is based at least in part on the realization that, for an RFID chip including a sensing capability, the required antenna connection and transponder packaging are strongly influencing the capability or sensitivity of detecting the desired physical parameter. In case of a temperature sensor integrated into the RFID chip, the surrounding packaging material will isolate the chip from the sensing surface, resulting in inaccurate measurement values due to a thermal gradient and/or thermal inertia. In case the RFID chip includes strain sensing capabilities, any packaging material placed between the surface to be monitored and the RFID chip acts as a stress relief and strongly reduces the measurement sensitivity.

According to the present invention, it has been realized that the above problems can be overcome by using a specific packaging and mounting method of the passive RFID transponder. In particular, after the RFID chip has been placed on an antenna substrate, for example, using flip chip technology, and the electrical connection between the substrate and the chip has been established, for example, using conductive glue, soldering, or a thermos-compression bonding process, a polymer spacer, for example, a polymer foil, with a thickness that is slightly higher than the chip thickness is attached to the antenna substrate. The polymer layer or foil has an opening in the chip area, and acts as a spacer for further packaging of the full transponder. In particular, the polymer spacer keeps the opening free of any packaging material that could influence the sensing capability of the RFID chip. With this configuration, the passive sensing RFID chip remains unprotected and is suitable for attaching to the surface to be monitored. In particular, the RFID chip can be mounted in close proximity to said surface to be monitored.

The present disclosure is also based at least in part on the realization that, depending on the final packaging process, small vias (i.e., passages or through-holes) can be provided in the antenna substrate adjacent to the RFID chip. Said vias can be used for the injection of an appropriate filler material to fill the gaps between the RFID chip and the inner peripheral surface of the opening in the spacer, as well as any remaining gap between the RFID chip and the surface to be monitored. In this manner, the RFID chip can be further protected, while at the same time maintaining the close proximity to the surface to be monitored.

In this respect, it has also been realized that the thickness of the polymer spacer can be selected in accordance with the further packaging, for example, to minimize the gap between the chip and a surface to be monitored, and/or to set the distance between the chip and the surface to be monitored to a desired value. In this manner, the sensing capability of the RFID sensor device can be maximized for the best results in terms of accuracy and dynamic response.

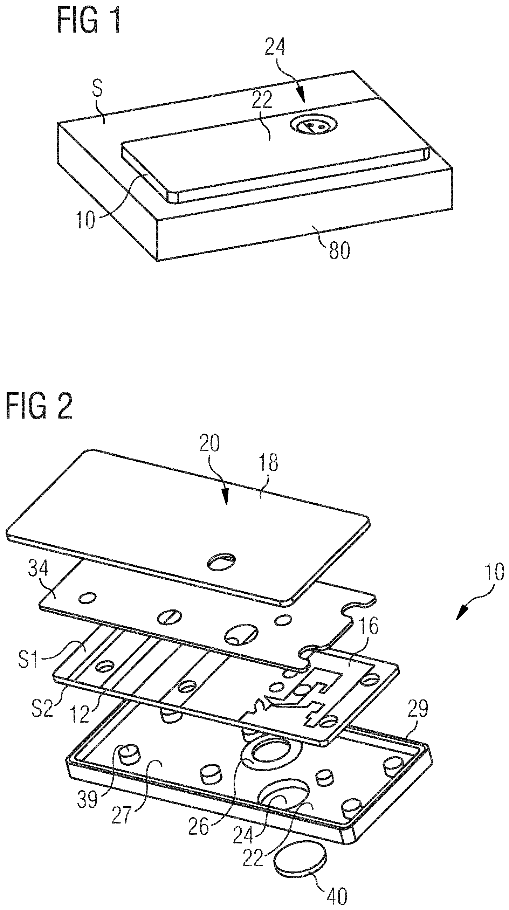

Referring now to the drawings, Fig. 1 shows a schematic perspective view of an RFID sensor device 10 in accordance with the present disclosure. RFID sensor device 10 is attached to a surface S of an object 80 to sense at least one physical quantity of object 80, as will be described in more detail in the following. It will be readily appreciated that the at least one physical quantity to be monitored can be any desired physical quantity such as temperature, strain, ambient light, relative humidity, and the like. Further, it will be appreciated that object 80 is not limited to any particular object, and can be any desired object, the properties of which are to be monitored. One exemplary application is the measurement of the temperature of connection bars in electrical power generators.

As shown in Fig. 1, in the exemplary embodiment, RFID sensor device 10 comprises a housing 22, with a through-hole 24 formed in housing 22. The purpose of through-hole 24 will be explained in the following. RFID sensor device 10 may have any desired shape, in particular, size and thickness. For example, RFID sensor device 10 may have a length of between 50 and 150 mm, a width of between 10 and 50 mm, and a height of between 2 and 20 mm.

Fig. 2 shows an explosive view of RFID sensor device 10. As shown in Fig. 2, RFID sensor device 10 comprises a substrate 12 having a first surface S1 and an opposite second surface S2. An RFID antenna 16 is provided on substrate 12. RFID antenna 16 may have any desired and known configuration, and may be formed on substrate 12 in a known manner to facilitate RFID communications. An RFID chip 14 is mounted on first surface S1 of substrate 12. RFID chip 14 is configured to perform RFID communications via RFID antenna 16 in a known manner. Here, it will be appreciated that RFID chip 14 can be electrically connected to RFID antenna 16 via physical connections, for example, using soldering or the like, or may be inductively coupled to RFID antenna 16.

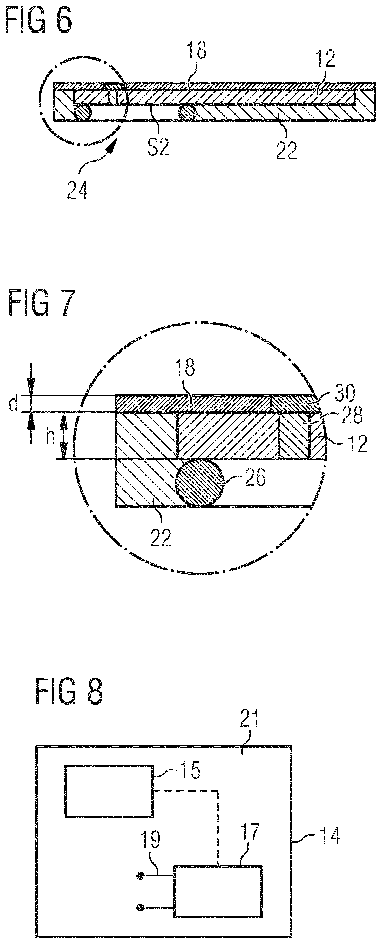

Fig. 8 shows an exemplary configuration of RFID chip 14, including communications and control circuitry 17, which is connected to RFID antenna 16 (not shown) via terminals 19. Further, as shown in Fig. 8, RFID chip 14 includes sensing circuitry 15 for sensing at least one physical quantity. Here, it will be appreciated that sensing circuitry 15 may be embodied as a known microelectromechanical systems (MEMS) device, or any other appropriate circuitry that is adapted to sense a physical quantity such as temperature or strain at or adjacent to sensing circuitry 15. As RFID chips having such a sensing capability are known (examples include EM | aura-sense (EM4152), AM5 | (SL900A), ASYGN | (AS321X), AXZON | Magnus^{®}-S (AN002)), no detailed description will be given herein. In any case, it will be appreciated that both communications and control circuitry 17 and sensing circuitry 15 are formed on a die 21 in a known manner.

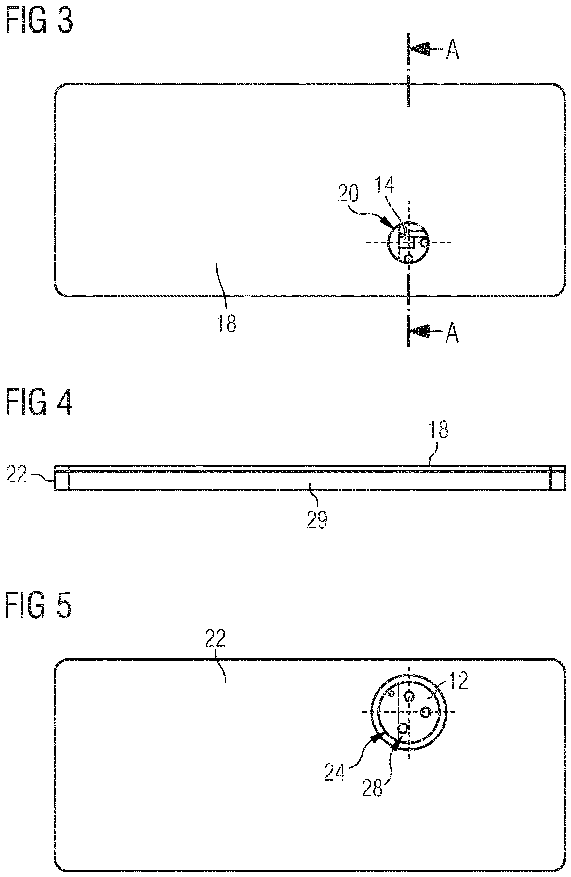

Returning to Fig. 2, RFID sensor device 10 further comprises a spacer 18 provided on first surface S1 of substrate 12. Spacer 18 includes an opening 20, i.e., a through-hole extending through spacer 18. Opening 20 is formed in spacer 18 in such a manner that, in the state in which spacer 18 is provided on first surface S1, and RFID chip 14 is mounted on first surface S1, RFID chip 14 is mounted (disposed) inside opening 20 (as shown in Fig. 3).

In the example shown in Fig. 2, RFID sensor device 10 further comprises an adhesive layer 34, for example, an adhesive tape, and spacer 18 is attached to substrate 12 via adhesive layer 34. In this manner, spacer 18 and substrate 12 can be integrated with each other, and RFID chip 14, which may already be mounted to substrate 12 when substrate 12 is combined with spacer 18, can be arranged inside opening 20. Here, it will be appreciated that adhesive layer 34 is only one example for attaching spacer 18 to substrate 12. It will be appreciated that in other embodiments other means of attaching spacer 18 to substrate 12 can be used, or that adhesive layer 34 may be omitted, and spacer 18 can be provided on substrate 12 in a desired positional relationship, for example, by using a housing or the like that aligns and presses spacer 18 against first surface S1 of substrate 12. Generally, however, spacer 18 is arranged such that the bottom surface of the same is in contact with first surface S1 of substrate 12, such that a desired positional relationship between an upper surface of RFID chip 14 and an upper surface of spacer 18 can be obtained.

In particular, the thickness of spacer 18 can be selected such that a gap is formed between an upper surface of RFID chip 14 and an upper surface of spacer 18, with said gap having a desired dimension, for example, between around 50 µm and around 300 µm. In this manner, if spacer 18 is, for example, configured to be attached to surface S of object 80 to sense the at least one physical quantity of object 80, a desired distance between RFID chip 14, in particular, sensing circuitry 15 of the same, and a surface to be measured can be assured.

As shown in Fig. 2, the assembly including substrate 12 (with RFID chip 14 mounted on the same) and spacer 18 can be further packaged, for example, in housing 22. Housing 22 accommodates substrate 12 from a side of second surface S2 of substrate 12. For example, as shown in Fig. 2, housing 22 may be box-shaped with a bottom 27 and an outer peripheral wall 29 protruding upwards from bottom 27 and defining an opening of housing 22.

As also shown in Fig. 2, in the exemplary embodiment, housing 22 includes a through-hole 24 provided at a position corresponding to opening 20 in spacer 18. A sealing element 26, for example, an O-ring is provided between housing 22 and substrate 12. Sealing element 26 is disposed inside through-hole 24. Further, as also shown in Fig. 2, a cap 40 may optionally be provided, and may be configured to close through-hole 24. This will be described in more detail in the following.

Figs. 3, 4 and 5 show a plan view, a side view and a bottom view, respectively, of RFID sensor device 10. In the example shown in Figs. 3 to 5, housing 22 is closed by spacer 18. In other words, substrate 12, adhesive layer 34, and spacer 18 are arranged in/on housing 22 in this order from the side of housing 22. A bottom surface of spacer 18 is in contact with an upper surface of peripheral wall 29 of housing 22 to close housing 22, with substrate 12 being firmly arranged and protected inside housing 22 and spacer 18. This can also be seen in Fig. 6, which shows a cross-sectional view along the line A-A in Fig. 3. It will be appreciated, however, that the casing formed by housing 22 and spacer 18 is only one example, and that any other appropriate packaging including spacer 18 may be used in order to obtain RFID sensor device 10. Likewise, it will be appreciated that any appropriate materials can be used, for example, for housing 22, substrate 12, and spacer 18. In particular, it will be appreciated that substrate 12 may be formed as a printed circuit board using any known material that is generally used to form such circuit boards. Further, spacer 18 may be made from resin, for example, a polymer such as PP, PMMA, PTFE, PET, PC, PA or the like. Similar materials can be used as the material of housing 22, but preferably TPV is used for housing 22. Of course, it will be appreciated that any other appropriate material can be used for housing 22, as long as it does not affect the signal transmission from RFID chip 14 in a negative manner, and provides the required mechanical stability for protecting substrate 12 and RFID chip 14, at least in case such a protection is necessary. In other applications, where, for example, RFID sensor device 10 is arranged inside a housing of object 80 to be monitored, and does not need to be protected, housing 22 may be omitted. In such a case, RFID sensor device 10 only comprises substrate 12 and spacer 18, which can again be directly attached to surface S to be monitored.

As previously mentioned, a thickness d of spacer 18 may be selected appropriately to obtain the desired distance between RFID chip 14 and surface S to be monitored. For example, thickness d of spacer 18 may be between around 50 µm and around 300 µm. Likewise, a thickness of RFID chip 14 may also be between around 50 µm and around 300 µm. It will be appreciated that, generally, thicknesses of spacer 18 and RFID chip 14 are adapted to each other such that RFID chip 14 does not protrude from opening 20, and remains protected inside opening 20.

As shown, for example, in Fig. 5, in some embodiments, substrate 12 includes at least one via 28 (i.e., at least one through-hole) extending through substrate 12, in particular, at a position adjacent to RFID chip 14. At least one via 28 is configured to allow passage of a liquid filler 30 from the side of second surface S2 of substrate 12 into opening 20. Filler 30 can be any appropriate material, for example, a glue or the like (examples include Kyowa CC33A, HBM Z70), which can cover RFID chip 14 to further protect the same inside opening 20, and to fill any remaining gap between RFID chip 14 and surface S of object 80 to be monitored. Here, it will be appreciated that, generally, filler 30 may be applied after attaching RFID sensor device 10 to surface S of object 80. For example, after attaching RFID sensor device 10 to object 80, cap 40 may be removed from through-hole 24, and filler 30 may be applied. Sealing element 26, for example, an O-ring, can reliably prevent leakage of filler 30 inside housing 22.

It is particular advantageous if filler 30 is selectively supplied to opening 20 via one specific via 28. In this case, any additional vias (in the example shown in Fig. 5, two additional vias) can be used to detect the filling of opening 20. In other words, once filler 30 that is supplied via the selected one via 28 exits through the one or more additional vias, it can be determined that opening 20 is completely filled with filler 30. In this case, supply of filler 30 can be stopped. After supplying filler 30, through-hole 24 can again be closed using cap 40. Here, it will be appreciated that the presence of vias 28, more particularly, the use of filler 30 is optional. In other words, in some embodiments, no filler 30 is present in opening 20, such that RFID chip 14 is exposed to an outside via opening 20. This may be desirable in some applications where, for example, the presence of filler 30 may negatively affect the measurements to be performed.

In some embodiments, it is advantageous to provide RFID antenna 16 on second surface S2 of substrate 12. In such a case, substrate 12 preferably has a thickness h of between around 1 mm and around 5 mm. In this manner, any interference between RFID antenna 16 and the circuitry provided on RFID chip 14 can be reduced or prevented. In this manner, both the connection between RFID chip 14 and RFID antenna 16, and the sensing capability of RFID chip 14 can be improved. This is particularly advantageous if, for example, the surface S to be monitored is electrically conductive.

### Industrial applicability

As described above, with the packaging described herein, an RFID sensor device 10 can be obtained that has a high detection accuracy due to the close proximity between RFID chip 14 and surface S to be monitored. In particular, this is achieved by appropriately selecting the thickness d of spacer 18 and arranging RFID chip 14 inside opening 20 formed in spacer 18.

An exemplary method of manufacturing RFID sensor device 10 will be described in the following. In a first step, substrate 12 having first surface S1 and opposite second surface S2 is provided, with RFID antenna 16 being provided on substrate 12 in a known manner, for example, by surface metallization on surfaces S1 and S2 and interconnecting the metallized surfaces using conductive vias.

Next, RFID chip 14 is mounted on first surface S1 of substrate 12 in a known manner, for example, using flip chip technology. RFID chip 14 is configured to perform RFID communications via RFID antenna 16. Additionally, RFID chip 14 includes sensing circuitry 15 for sensing at least one physical quantity such as temperature and strain.

In a subsequent step, spacer 18 is provided on first surface S1 of substrate 12, for example, by attaching the same to substrate 12 via adhesive layer 34. Spacer 12 includes opening 20 extending through spacer 12, and the position of opening 20 is selected such that RFID chip 14 is mounted inside opening 20 after spacer 18 has been provided on substrate 12.

If desired, the method may further comprise a step of forming housing 22 for accommodating substrate 12. In some embodiments, housing 22 may be formed by overmolding. In other words, after the assembly including substrate 12 and spacer 18 has been obtained, an overmolding process may be performed using an appropriate die to integrally form housing 22 with said assembly. Here, for example, a plurality of protrusions 39 may be formed on housing 22 to protrude into appropriate openings in, for example, substrate 12 and adhesive layer 34 to obtain a firm integration.

As previously mentioned, housing 22 may be formed such that it is closed by spacer 18, i.e., the bottom surface of spacer 18 is in contact with the opposed surface of peripheral wall 29 of housing 22 (see also Figs. 6 and 7). In some embodiments, sealing element 26 can be integrated with housing 22 during formation of the same, for example, by the above-mentioned overmolding process. For example, sealing element 26 may be mounted on a protrusion of the corresponding die that is in contact with substrate 12.

It will be appreciated that the above-described method of forming housing 22 is only exemplary, and housing 22 may be formed in a different manner, for example, in a separate molding process. In such a case, housing 22 may be combined with substrate 12 and spacer 18 in a different manner, for example, by arranging substrate 12 inside housing 22, and attaching spacer 18 to housing 22, for example, using adhesive layer 34.

After packaging of substrate 12 and spacer 18 has been completed, RFID sensor device 10 (with or without housing 22) may be attached to surface S of object 80 in an appropriate manner, for example, using an adhesive or the like. In some embodiments, RFID sensor device 10 may also be attached using screws or rivets, for example, by providing (e.g., drilling) appropriate holes in protrusions 39. During operation, RFID sensor device 10 can be interrogated using appropriate reader devices in a known manner, to obtain the measurement results of RFID chip 14, in particular, using sensing circuitry 15 provided on the same.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the general disclosure.

Recitation of ranges of values herein are merely intended to serve as a shorthand method for referring individually to each separate value falling within the range, unless otherwise indicated herein, and each separate value is incorporated into the specification as if it were individually recited herein. All method steps described herein can be performed in any suitable order, unless otherwise indicated or clearly contradicted by the context.

Although the preferred embodiments of the present disclosure have been described herein, improvements and modifications may be incorporated without departing from the scope of the following claims.

## Claims

1. An RFID sensor device (10) comprising:
- a substrate (12) having a first surface (S1) and an opposite second surface (S2);
- an RFID antenna (16) provided on the substrate (12);
- an RFID chip (14) mounted on the first surface (S 1) of the substrate (12), the RFID chip (14) being configured to perform RFID communications via the RFID antenna (16) and including sensing circuitry (15) for sensing at least one physical quantity; and
- a spacer (18) provided on the first surface (S1) of the substrate (12), the spacer (12) including an opening (20) extending through the spacer (12), the RFID chip (14) being mounted inside the opening (20).

2. The RFID sensor device of claim 1, further comprising a housing (22) accommodating the substrate (12) from a side of the second surface (S2) of the substrate (12).

3. The RFID sensor device of claim 2, wherein the housing (22) includes a through-hole (24) provided at a position corresponding to the opening (20) in the spacer (18).

4. The RFID sensor device of claim 3, further comprising a sealing element (26), for example, an O-ring, provided between the housing (22) and the substrate (12), the sealing element (26) being arranged inside the through-hole (24).

5. The RFID sensor device of claim 2 or 3, further comprising a cap (40) configured to close the through-hole (24).

6. The RFID sensor device of any one of claims 2 to 5, wherein the housing (22) is closed by the spacer (18).

7. The RFID sensor device of any one of claims 1 to 6, wherein the substrate (12) includes at least one via (28) extending through the substrate (12) at a position adjacent to the RFID chip (14), the at least one via (28) being configured to allow passage of a liquid filler (30) from the side of the second surface (S2) of the substrate (12) into the opening (20).

8. The RFID sensor device of any one of claims 1 to 7, further comprising an adhesive layer (34), for example, an adhesive tape, the spacer (18) being attached to the substrate (12) via the adhesive layer (34).

9. The RFID sensor device of any one of claims 1 to 8, wherein a gap is formed between an upper surface of the RFID chip (14) and an upper surface of the spacer (18), preferably wherein the gap is between around 50 µm and around 300 µm.

10. The RFID sensor device of any one of claims 1 to 9, wherein a thickness (d) of the spacer (18) is between around 50 µm and around 500 µm.

11. The RFID sensor device of any one of claims 1 to 10, wherein the spacer (18) is made from resin, for example, a polymer such as PP or the like.

12. The RFID sensor device of any one of claims 1 to 11, wherein the RFID chip (14) is exposed to an outside via the opening (20).

13. The RFID sensor device of any one of claims 1 to 12, wherein the spacer (18) is configured to be attached to a surface (S) of an object (80) to sense the at least one physical quantity of the object (80), wherein the sensing circuitry (15) is configured to sense at least one of temperature and strain of the surface (S).

14. The RFID sensor device of any one of claims 1 to 13, wherein the RFID antenna (16) is provided on at least the second surface (S2) of the substrate (12), preferably wherein the substrate (12) has a thickness (h) of between around 1 mm and around 5 mm.

15. A method of manufacturing an RFID sensor device (10), the method comprising:
providing a substrate (12) having a first surface (S1) and an opposite second surface (S2), an RFID antenna (16) provided on the substrate (12);
mounting an RFID chip (14) on the first surface (S 1) of the substrate (12), the RFID chip (14) being configured to perform RFID communications via the RFID antenna (16) and including sensing circuitry (15) for sensing at least one physical quantity; and
providing a spacer (18) on the first surface (S1) of the substrate (12), the spacer (12) including an opening (20) extending through the spacer (12), the RFID chip (14) being mounted inside the opening (20).
